# EUROPEAN PATENT SPECIFICATION

(11) **EP 2 181 408 B1**
(45) Date of publication and mention of the grant of the patent: **07.03.2012**
(21) Application number: 07827621.9
(22) Date of filing: 30.07.2007
(51) Int. Cl.: G06F 17/30, G06K 7/00, G09B 5/06, G11B 27/10, G11B 27/32

(54) **A GUIDE SYSTEM FOR MUSEUMS, TRADE FAIRS OR EXHIBITS**
FÜHRUNGSSYSTEM FÜR MUSEEN, HANDELSMESSEN ODER AUSSTELLUNGEN
SYSTÈME DE GUIDE POUR MUSÉES, SALONS COMMERCIAUX OU EXPOSITIONS

(43) Date of publication of application: 05.05.2010
(73) Proprietor: Administrations Center di Massimo Berni & C. S.A.S, 50121 Firenze (IT)
(72) Inventor: BERNI, Massimo, I-50011 Antella, Firenze (IT)
(74) Representative: Bardini, Marco Luigi
(86) International application number: PCT/IT2007/000541
(87) International publication number: WO 2009/016661

(56) References cited:
- EP-A- 0 701 382
- EP-A- 0 969 438
- EP-A- 1 696 354
- WO-A-2007/063571
- JP-A- 2003 173 477
- US-A- 5 796 351
- US-A- 5 929 848
- CHUN-TING CHOU ET AL: "An Enhanced Inter-Access Point Protocol for Uniform Intra and Intersubnet Handoffs" IEEE TRANSACTIONS ON MOBILE COMPUTING, IEEE, NEW YORK, NY, US, vol. 4, no. 4, July 2005 (2005-07), pages 321-334, XP011133503 ISSN: 1536-1233
- "Excerpt from chapter 5" RADIO RESOURCE MANAGEMENT STRATEGIES IN UMTS, X, XX, 2005, pages 247-249, XP007904380

## Description

The present invention relates to a guide system for visitors to exhibits of objects, e.g. museums, art shows, exhibits of objects to be sold in markets etc. Currently, guide systems are managed by people who accompany visitors, generally assembled in groups, or through individual portable guide devices, which provide information on the exhibited objects, e.g. with a historical, artistic or technical content or the like. In general this information is recorded on a magnetic medium - such as a magnetic tape cassette - in a pre-established order by the organizer of the exhibit, and the visitor can listen to *it* (optionally omitting information he/she is not interested in) by means of the guide device which, in practice, is little more than a normal magnetic media reader.

These systems are quite costly due to the number of electronic media to be handled in the various languages, and they oblige the visitor to follow a predetermined itinerary. Furthermore, once the visit is over and the guide device has been returned, the visitor has nothing but the personal memory of the visit made and at the most he/she can purchase, at considerable cost, the complete exhibit guide to take away.

The invention relates in particular to guide systems as disclosed in US 5929848 of the kind comprising: in the vicinity of each exhibited object or of noteworthy points of the route, a respective identification device, able to emit in a limited portion of the surrounding space a sequence of electromagnetic pulses representing a unique code correlated to the object; and a multiplicity of individual portable guide devices for visitors, able to provide information to them. This type of guide systems enables visitors to select a preferred visit route at will.

The present invention relates to a system for activating automatically the description of the information of the objects on display and of any other noteworthy points of the route - such as obstacles for the disabled people, sanitary facilities, telephones or other items - by means of said portable device, the system having the essential features of attached claim 1.

The portable guide device of a visitor traveling over a segment of the visit route in a rushed manner, e.g. because she/he is not interested in that particular sector, is not activated by the individual sequences of impulses it receives, and it will start describing a single particular object only after the visitor dwells near it at least for the time corresponding to the period of the succession of sequence, i.e. for the time necessary to receive two equal and consecutive sequences.

Preferably, the reproduction of the information by means of the portable guide device about an object in front of which the visitor has dwelled is interrupted automatically when the receive and control circuit of the portable guide device ceases receiving said sequence of impulse representing the unique code assigned to said object for a time at least equal to said period. Moreover, a system according to the invention can comprise the fact that, while the portable guide device reproduces the information about an object the visitor is interested in, if the receive and control circuit of said device receives another continuous and cadenced succession of another sequence of impulses representing a different unique code of another object, e.g. if the fields of emission of the identification device of two respective near objects are superposed ("collide") even only partially with each other and the visitor is in said field superposition region, the receive and control circuit of the portable guide device completes the description of the first object and then automatically starts the description of the second object.

In this way, the visitor can quicken his/her route when she/he has exhausted interest for a certain object and moves on to a neighboring one.

In a preferred embodiment of the invention, the guide system carrying out a process described above generally comprises a central control server connected to said individual guide devices by means.of a wireless transmission network. This network in turn comprises one or more transmitting - and - receiving radio nodes, each of which is located to receive/transmit within its own area along the visit route, and the server signals on its own screen the presence and a recognition code of each portable guide device present in the reception/transmission area, to allow easily to monitor the current crowding condition of the visit routes. The server can also be programmed to activate an alarm signal when the number of guide devices present simultaneously in one of said areas exceeds a predetermined threshold.

According to the main aspect of the invention, in addition to a main identification device, for the protection of one or more particularly important objects on display, at least one auxiliary identification device is applied, which transmits a unique code in a field having a substantially reduced plan view dimension than that of the main identification device. It is thereby possible to activate the communication of an alarm signal to the server through the portable guide device and the wireless network when the user approaches the object in the transmission field of said auxiliary identification device.

In the guide devices various visit routes can be stored, which are selectable by the visitor by means of a pushbutton of the portable device itself and a menu displayed on the screen thereof, the related map of each route being displayed on the screen of the portable guide device.

If the guide system is dedicated to a market exhibit of objects for sale, an order form can be stored in the portable guide devices for the purchase of the displayed objects. Said module is displayed on the screen of each device automatically at the end of the description of an object, and the purchase can be confirmed by means of a pushbutton of the same portable guide device and the form can be transmitted in real time to the server by means of the wireless network. The server can thus manage the received orders reserving the goods in stock and providing the exit cash register with the related accounting documents such as shipping bills and invoices.

The guide system implementing an information process according to the invention can comprise a Web site which can be contacted after the visit by each visitor registered therein by entering recognition credentials, such as a user code ID and a password PW assigned upon delivery of the portable guide device, to receive the information on the route followed and the descriptions heard during said route through the Internet in the form of multimedia files.

The invention will be better understood following the description and the accompanying drawing, which shows a non limiting example thereof. In the drawing,
Figs 1A, 1B and 1C schematically show a guide system for an exhibit of art objects according to the invention in different phases of use, i.e. respectively in a phase of visiting, storing information, and delivering documentation about a visit made to visitors who wish to preserve it;
Fig. 2 shows a similar system to the one in Fig. 1A, but for a show of objects for sale;
Fig. 3 shows a perspective view of a portable guide device used in the systems of the previous figures;
Fig. 4 shows a block diagram of the circuit of the portable guide device of Fig. 3;
Fig. 5 shows a procedural flow chart stored in software form in the portable guide device of Fig. 3.

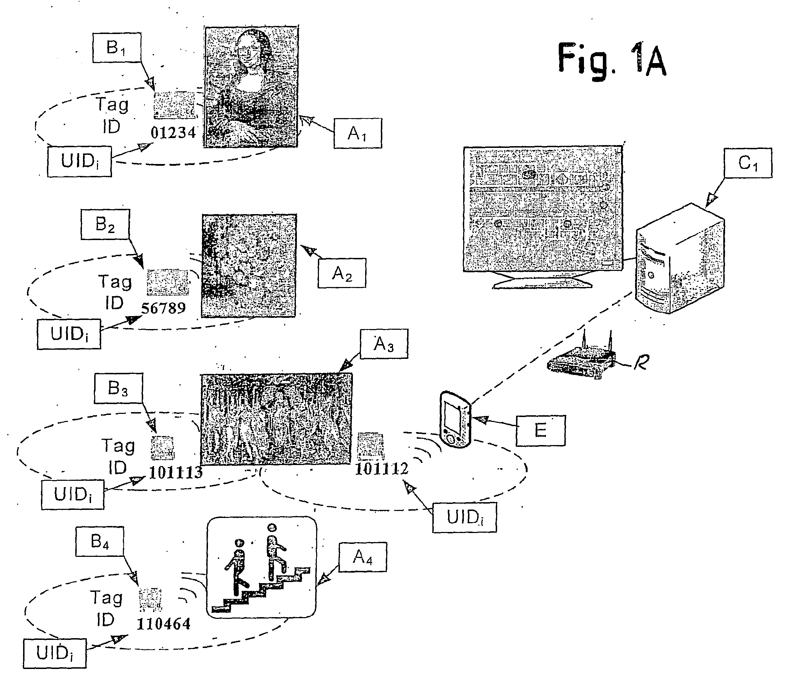

With reference to Figs. 1A, reference numbers A1, A2, A3,...An respectively indicate paintings, statues or other objects on display in an art show, and also relevant areas for a disabled visitor, such as elevators, escalators, sanitary facilities or other items. Located in the vicinity of each of the aforesaid relevant objects and areas a respective identification device B1, B2, B3, ... Bn is positioned, which is composed by a RFID ISO 18,000. compatible tag, e.g. an active Work-Tag® Series i-D2 by the company Advanced Reader Technologies. Each of these identification devices Bi (B1, B2, B3, ...Bn) is provided with its own battery and it repeatedly emits in the surround space - with a preset frequency, identical for all devices - a sequence of radio impulses that represents a unique code UlDi for each identification device Bi, in compliance with specific international standards, said code corresponding to a number shown in Fig.1A in correspondence of each device Bi.

The system comprises a computer C1 acting as a server, which is provided with keyboard and monitor and is connected in wireless local area network to one or more antenna modules R of the network and in the worldwide web, in particular to a website of the art exhibit.

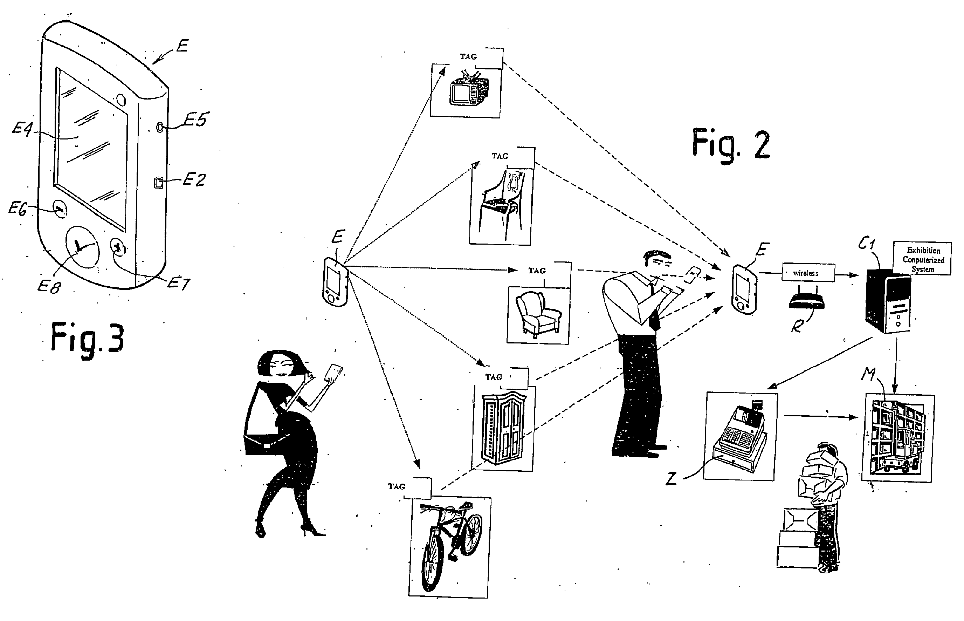

The system comprises a multiplicity of mutually identical portable guide devices E, each to be delivered to a visitor. The portable guide device is shown in perspective in Fig. 3 and it has a flat, compact shape with dimensions similar to those of a credit card. Said device comprises: a USB micro connector E2 at the output of a USB port for connection with the computer C1 for data exchange; an antenna (not shown in Fig. 3) able to receive the UIDi codes transmitted by the Tags Bi; on the front part of the device, an alphanumeric liquid crystal display E4 whereon the title of the work in front of which the visitor is positioned at the moment can be displayed, and also descriptive messages, instructions and the like; an outlet E5 for an earphone; pushbuttons E6, E7 for adjusting the volume and E8 for confirming options of a menu displayed on the screen E4.

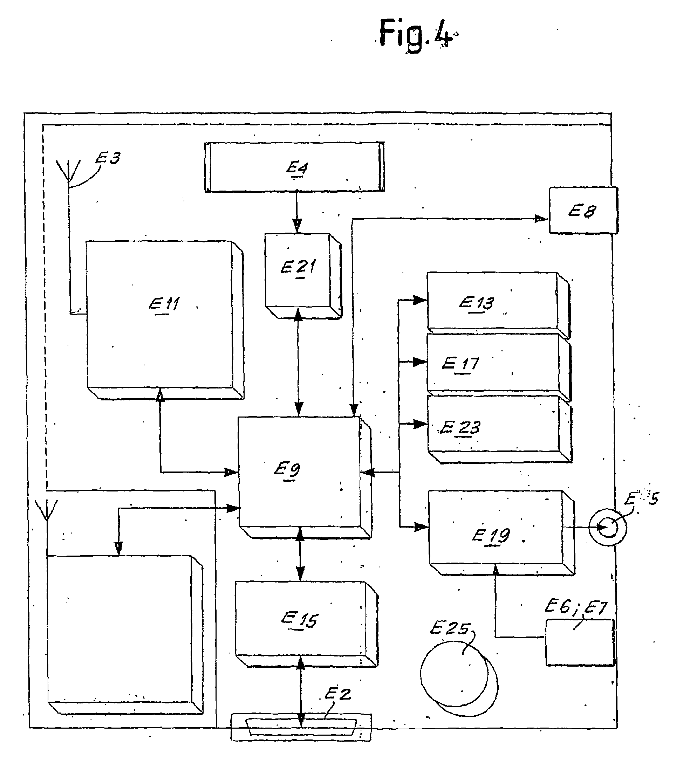

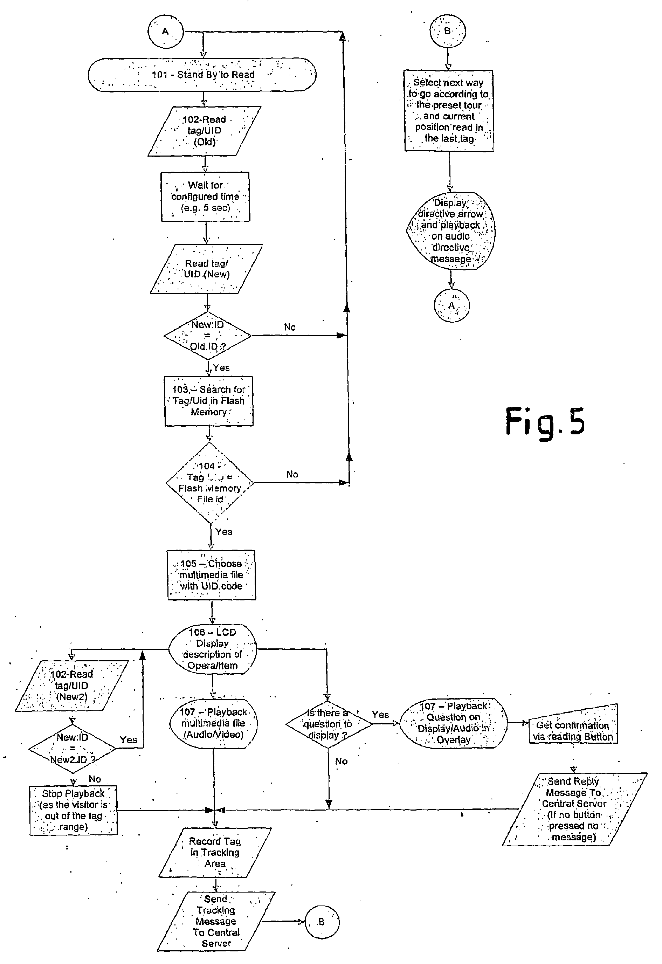

The block diagram of Fig. 4 shows the functional structure of the electrical circuit of the aforesaid portable guide device E, circuit that includes a control module E9 with a microprocessor connected to various peripheral modules or circuits, and specifically:
- a radio frequency module E11 able to receive through an antenna E3 the radio signals that form the UlDi codes coming from the identification devices Bi in front of which the visitor, who carries the guide device, passes. The control module E11 can store said UID codes in a flash memory unit E13;
- a USB port E15 with the related output connector E2, to receive from the computer C1 - before starting the visit - multimedia files describing the works of the show in the language selected by the visitor, files that the control module E9 stores in a flash memory unit E17. Moreover, the same USB port E15 is used to transmit to the computer C1 - at the end of the visit - the list of UID codes relating to the visited works;
- an audio module E19 able to reproduce the audio files that describe the works visited through an earphone connected to the outlet E5 and to the volume control pushbuttons E6, E7;
- a control module E21 for the display E4, to display the titles of the works visited and any diagnostic messages on the state of the device;
- a flash memory unit E23 connected to the control module E9 to store the firmware for the operation of the portable guide device E based on the flow chart of Fig. 5, as will be described later on;
- a rechargeable battery E25 to supply energy to the circuits of the portable guide device.

The portable guide device E is compact and light so it can be carried in a jacket pocket or hanging from the neck with a string, thereby leaving the hands free.

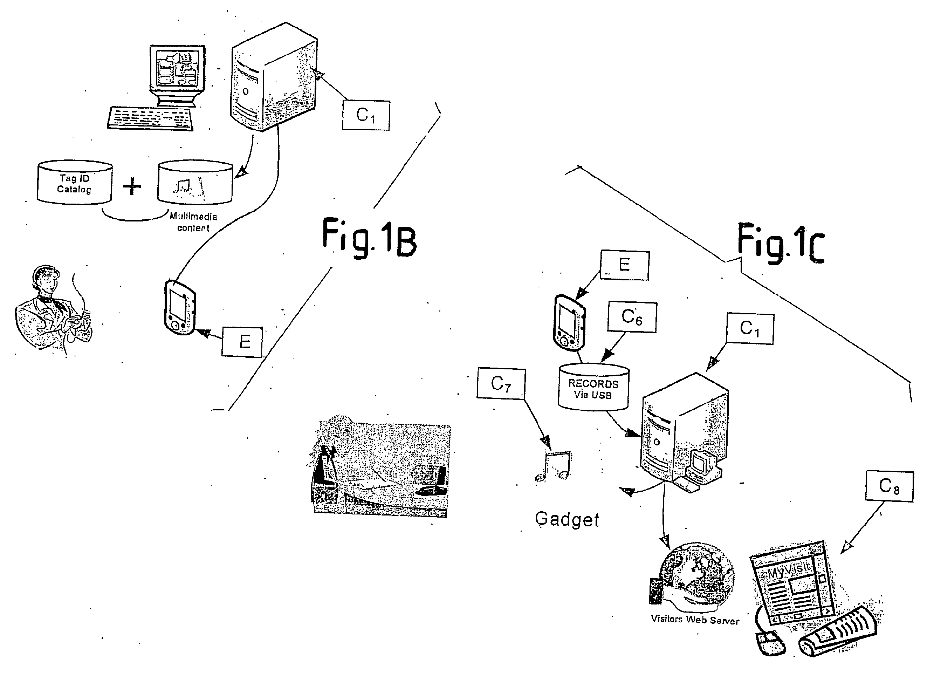

In a preparatory phase, whereto refers Fig. 1B, by means of portable readers available on the market (e.g. an active Work-Tag® with PCMCIA portable reader for s-Cards II and s-Cards III by the company Advanced Reader Technologies) the UlDi codes of the identification devices are stored in a database that resides in the memory of the computer C1 combined with the respective identification codes of the works shown and of the noteworthy areas of the route. For each work exhibited, in the database of the server C1 are also stored one or more multimedia files (e.g., text files in various languages, image files, audio files in various languages), that describe the work itself. Software modules are stored in the memory of the computer C1, which are able to send - by extemporaneous connection through the USB port - to the portable guide device of a visitor who comes to the entrance desk of the show the multimedia files and the UlDi codes relating to the exhibited objects and to other noteworthy areas.

Furthermore a software module is also stored in the memory of the computer C1 which is able - after the return of the-portable guide device E. at the end of the visit - to transfer to the computer C1 the sequence of UlDi codes received during the visit of the exhibit pertaining to the objects in whose vicinity the visitor dwelled as described above. In this way, when the visitor returns the portable guide device E to the exit desk of the exhibit, she/he can be provided with the documentation about the objects visited in the route she/he followed. In fact, in this phase (Fig. 1 C), after having connected the portable guide device E to the computer C1 by means of the USB outlet - it is possible to provide the visitor with the multimedia files C7 pertaining to the visited objects, e.g. stored on a CD, or also a paper printout C8 with the audio - visual information about the route following during the tour. The visitor, if registered in the website of the exhibit, can also access to the site and download this information directly via the internet.

The operation of the portable guide device E according to a software stored therein is shown schematically in the flow chart of Fig. 5, with reference also to Fig. 4. The device is normally in a condition 101 wherein it awaits a signal from the identification devices Bi. When the visitor carrying the guide system E enters the useful transmission radius of any one Bi of the aforesaid identification devices, the emitted signal is received by the antenna E3 (see also Fig 4) and the unique code UIDi of the identification device is "read" by the radio frequency module E11 (step 102); the device starts a countdown process for a pre-established period of time and after said period it again reads a possible new sequence of signals received through the antenna E3: if the corresponding new UID code is different, the visitor merely passed in front of the object, but she/he did not want to receive information from the guide device; otherwise, if the last UID code received is equal to the previous one, it is compared (step 103 and 104) through the control module E9 with a table of codes stored in the flash memory unit E13 containing all codes associated to the exhibited works, these codes being also associated to one or more multimedia files stored in the flash memory unit E17. Having verified that the signal corresponds to one of the stored UID codes, the audio-visual reproduction of the related one or more multimedia files is started (steps 106, 107) through the earphone and/or the display E4 of the device E. Lastly, the unique code UID of the objects whose description has been activated is stored in a list of codes visited In the visitor's route, list that resides also in the flash memory unit E13. At the end of the visit said memory will be uploaded through the UBS port E2. into the database of the computer C1 in order to enable to deliver to the visitor, if required, the documentation about the route she/he followed and the objects that interested her/him.

Fig. 2 shows a system similar to the one of Fig. 1A used in a market-show of objects for sale. As in the previous case, at the start of the route a portable guide device E is delivered to a possible buyer, in which information has been stored about all the objects in the show, e.g. information such as the type, the dimensions, the possible colors, the price and other data. By means of a selection menu displayed on the screen of the portable guide device, the pushbutton E8 thereof and the wireless network of nodes R that connects the portable guide device E to the server C1, the buyer can confirm the purchase of the object in the vicinity of which she/he is located. As a result of this, the server C1 activates the steps of extracting the object selected from the warehouse M and emitting the accounting documents pertaining to the purchase, such as a bill of parcel and/or an invoice, and sends them to a cash register Z at the exit of the buyer's route. The procedure of recognition of the objects of interest of the buyer is the same one described in the previous case of a visit to a museum.

In the memory (E23) of the firmware of each individual guide device (E) a program can be stored for converting audio files into text files. This program can be activated automatically by the firmware of the portable guide device (E) to display the audio files with the description of the exhibited objects in the form of sliding text on the screen of the portable guide device (E) when the jack of an earphone is not inserted in the connector (E5) of the portable guide device (E).

It shall be understood that the.drawing shows only an example given only as a practical demonstration of the invention, whichcan vary in the forms and arrangements without departing form the scope of the invention as defined by the attached claims. Any presence of reference numbers in the appended claims has the purpose of facilitating reading the claims, with reference to the description, and does not limit the scope of protection represented by the claims.

## Claims

1. A guide system to provide visitors of an exhibit of objects with information for each of the exhibited objects, the system comprising: in the vicinity of each exhibited object a respective main identification device (Bᵢ), comprising its own power supply and control circuit and able to emit in a limited portion of the surrounding space a sequence of electromagnetic impulses representing a unique code (UIDᵢ) correlated to the object; a multiplicity of individual portable guide devices (E) for the visitors comprising receive circuits (E3, E11), control circuits (E9) able to provide them with said information, and processing means for automatically activating a description of said information by means of said portable guide device, wherein:
- each main identification device (Bᵢ), is continuously and periodically sequentially made to emit said sequences of impulses representing its own unique code (UIDᵢ), said sequences being mutually separated by a constant time interval (T) equal for all devices; and
- the processing means activate the reproduction of the information corresponding to an object (Ai) after said circuit receives at least two of said consecutive identical sequences of impulses separated from each other by said time interval (T);
the system further comprising a central control server (C1) connected to said portable guide devices (E) by means of a wireless transmission network comprising one or more transmitting - and - receiving radio nodes (R), each of which is located to receive/transmit within its own area along a visit route, the server (C1) being adapted to signal on a screen the presence and a recognition code of each portable guide device (E) present in the reception/transmission area,
wherein at least one auxiliary identification device is provided for one or more exhibited objects, said auxiliary identification device being adapted to transmit a unique code in a field having a substantially reduced plan view dimension with respect to that of the corresponding main identification device (Bᵢ) to activate the communication of an alarm signal through the portable guide device carried by a SLSer and the wireless network (R) to the server (C1) when the user approaches the object in the transmission field of said auxiliary identification device.

2. A guide system as claimed in claim 1, **characterized in that** said processing means are adapted to automatically interrupt the reproduction by the guide device of the information about an object (i) in front of which the visitor dwelled when the receive circuit (E3, E11) and the control circuit (E9) of the guide device (E) stops receiving said sequence of impulses representing the unique code (UIDᵢ) assigned to said object (i) for a time interval at least equal to said period (T).

3. A guide system as claimed in claim 1 or 2, **characterized in that** said processing means are adapted to control the receive and control circuit of the guide device so that, while the guide device (E) reproduces the information about an object (i) of the interest of the visitor, if the receive (E3, E11) and control circuit (E9) of the same device (E) receives another continuous and cadenced succession of another sequence of impulses representing a different unique code (UIDᵢ₊₁) of an object (i+1), the receive and control circuit of the portable guide device is adapted to complete the description of the object (i) and the to automatically start the description of the object (i+1).

4. A guide system as claimed in claim 3, **characterized in that** the receive and control circuit of the portable guide device is adapted to complete the description of the object (i) and then to automatically start the description of the object (i+1) if the fields of emission of the identification devices (Bᵢ, Bᵢ₊₁) of two respective objects (I, i+1) superpose or collide even only partially and the visitor is in said field superposition area.

5. A guide system as claimed in any of the previous claims, **characterized in that** the server (C1) is adapted to activate an alarm signal when the number of guide devices simultaneously present in one of said areas exceeds a threshold.

6. A guide system as claimed in one or more of the claims 1 through 5, **characterized in that** in the guide devices (E) are stored various visit routes, which are selectable by the visitor by means of a pushbutton (E8) of the guide device itself and a menu displayed on a screen (E4) thereof, the guide device displaying on the screen (E4) a map corresponding to each route.

7. A guide system as claimed in one or more of the claims 1 through 6 for a market show of objects for sale, **characterized in that** in the guide devices an order form is stored for purchasing the exhibited objects, the guide device (E) being adapted to automatically display said form at the end of the description of each object, a pushbutton being provided on the guide device (E) to allow the visitor to send to the server, by means of the wireless network (R), said order forms to confirm her/his purchase orders.

8. A guide system as claimed in one or more of the claims 1 through 7, wherein each individual guide device (E) is adapted to convert audio files into text files, and to automatically start to display the description of said information on the exhibited objects in the form of text sliding on the screen of the portable guide device (E) if a jack of an earphone is not inserted in a connector (E5) of the portable guide device (E).

9. A guide system as claimed in one or more of the claims 1 through 8, **characterized in that** it comprises a Web site adapted to be contacted after the visit by each visitor registered therein by entering recognition credentials, such as a user code ID and a password PW assigned upon delivery of the guide device, to receive through the Internet in the form of multimedia files the indications on the route followed and the descriptions heard during said route.

## Patentansprüche

1. Führungssystem, um Besuchern einer Ausstellung von Objekten Informationen für jedes der ausgestellten Objekte zur Verfügung zu stellen, welches System enthält: eine in der Nähe jedes ausgestellten Objektes befindliche entsprechende Hauptidentifikationsvorrichtung (Bᵢ), die ihre eigene Leistungsversorgung und Steuerschaltung enthält und in der Lage ist, in einem begrenzten Teil des umgebenden Raumes eine Sequenz von elektromagnetischen Impulsen zu emittieren, die einen einzigartigen Code (UIDᵢ) darstellen, der mit dem Objekt korreliert; eine Vielzahl von individuellen tragbaren Führungsvorrichtungen (E) für die Besucher, enthaltend Empfangsschaltungen (E3, E11) , Steuerschaltungen (E9), die in der Lage sind, ihnen die Informationen zur Verfügung zu stellen, und Verarbeitungseinrichtungen zum automatischen Aktivieren einer Beschreibung von den Informationen mittels der tragbaren Führungsvorrichtung, wobei:
- jede Hauptidentifikationsvorrichtung (Bᵢ) kontinuierlich und periodisch sequenziell veranlasst wird, die Sequenzen von Impulsen zu emittieren, die ihren eigenen einzigartigen Code (UIDᵢ) repräsentieren, wobei die Sequenzen gegenseitig durch ein konstantes Zeitintervall (T) getrennt sind, das für alle Vorrichtungen gleich ist; und
- die Verarbeitungseinrichtungen die Wiedergabe der Information entsprechend einem Objekt (Aᵢ) aktivieren, nachdem die Schaltung mindestens zwei der aufeinanderfolgenden identischen Sequenzen von Impulsen empfangen hat, die voneinander durch das Zeitintervall (T) getrennt sind;
wobei das System ferner einen zentralen Steuerserver (C1) enthält, der mit den tragbaren Führungsvorrichtungen (E) mittels eines drahtlosen Übertragungsnetzwerkes verbunden ist, das einen oder mehrere sendende und empfangende Funkknoten (R) enthält, von denen jeder angeordnet ist, dass er innerhalb seines eigenen Bereiches entlang einer Besuchsroute empfängt/sendet, wobei der Server (C1) dazu ausgelegt ist, auf einem Schirm die Anwesenheit und einen Erkennungscode von jeder tragbaren Führungsvorrichtung (E) zu signalisieren, die in dem Empfangs-/Sendebereich vorhanden ist,
wobei mindestens eine Hilfsidentifikationsvorrichtung für ein oder mehrere ausgestellte(s) Objekt(e) bereitgestellt ist, welche Hilfsidentifikationsvorrichtung dazu ausgelegt ist, einen einzigartigen Code in einem Feld zu senden, das eine erheblich reduzierte Planansichtsdimension bezüglich jener der entsprechenden Hauptidentifikationsvorrichtung (Bᵢ) hat, um die Kommunikation eines Alarmsignales über die tragbare Führungsvorrichtung, die von einem Benutzer getragen wird, und das drahtlose Netzwerk (R) zu dem Server (C1) zu aktivieren, wenn sich der Benutzer dem Objekt in dem Übertragungsfeld der Hilfsidentifikationsvorrichtung nähert.

2. Führungssystem nach Anspruch 1, **dadurch gekennzeichnet, dass** die Verarbeitungseinrichtungen dazu ausgelegt sind, die Wiedergabe von Informationen über ein Objekt (i), vor dem der Besucher verweilt, durch die Führungsvorrichtung automatisch zu unterbrechen, wenn die Empfangsschaltung (E3, E11) und die Steuerschaltung (E9) der Führungsvorrichtung (E) aufhört, die Sequenz von Impulsen, die den einzigartigen Code (UIDᵢ) repräsentiert, der dem Objekt (i) zugeordnet ist, über ein Zeitintervall zu empfangen, das mindestens gleich der Periode (T) ist.

3. Führungssystem nach Anspruch 1 oder 2, **dadurch gekennzeichnet, dass** die Verarbeitungseinrichtungen dazu ausgelegt sind, die Empfangs- und Kontrollschaltungen der Führungsvorrichtung so zu steuern, dass, während die Führungsvorrichtung (E) die Informationen über ein Objekt (i) wiedergibt, welches den Besucher interessiert, wenn die Empfangs- (E3, E11) und Steuerschaltung (E9) derselben Vorrichtung (E) eine andere kontinuierliche und rhythmische Abfolge einer anderen Sequenz von Impulsen empfängt, die einen unterschiedlichen einzigartigen Code (UIDᵢ₊₁) eines Objektes (i+1) repräsentiert, die Empfangs- und Steuerschaltung dazu ausgelegt ist, um die Beschreibung des Objektes (i) zu vervollständigen und dann automatisch die Beschreibung des Objektes (i+1) zu beginnen.

4. Führungssystem nach Anspruch 3, **dadurch gekennzeichnet, dass**, die Empfangs- und Steuerschaltung der tragbaren Führungsvorrichtung dazu ausgelegt ist, die Beschreibung des Objektes (i) zu vervollständigen und dann automatisch die Beschreibung des Objektes (i+1) zu beginnen, wenn sich die Emissionsfelder der Identifikationsvorrichtungen (Bᵢ, Bᵢ₊₁) von zwei entsprechenden Objekten (i, i+1) überlagen oder auch nur teilweise und sich der Besucher in dem Feldüberlagerungsbereich befindet.

5. Führungssystem nach jedem der vorherigen Ansprüche, **dadurch gekennzeichnet, dass** der Server (C1) dazu ausgelegt ist, ein Alarmsignal zu aktivieren, wenn die Anzahl von Führungsvorrichtungen, die sich gleichzeitig in einem der Bereiche befinden, einen Grenzwert überschreitet.

6. Führungssystem nach einem oder mehreren Ansprüchen von 1 bis 5, **dadurch gekennzeichnet, dass** in den Führungsvorrichtungen (E) verschiedenen Besuchsrouten gespeichert sind, die von dem Besucher mittels eines Druckknopfes (E8) der Führungsvorrichtung selbst und eines Menüs wählbar sind, das auf einem Schirm (E4) davon angezeigt wird, wobei die Führungsvorrichtung auf dem Schirm (E4) eine Karte entsprechend jeder Route anzeigt.

7. Führungssystem nach einem oder mehreren der Ansprüche 1 bis 6, für eine Messe von zu verkaufenden Objekten, **dadurch gekennzeichnet, dass** in den Führungsvorrichtungen ein Bestellformular gespeichert ist, um die ausgestellten Objekte zu kaufen, wobei die Führungsvorrichtung (E) dazu ausgelegt ist, um das Formular am Ende der Beschreibung jedes Objektes automatisch anzuzeigen, wobei ein Druckknopf an der Führungsvorrichtung (E) bereitgestellt ist, um es dem Besucher zu gestatten, dem Server mittels des drahtlosen Netzwerkes (R) die Bestellformulare zu senden, um ihre/seine Kaufbestellungen zu bestätigen.

8. Führungssystem nach einem oder mehreren der Ansprüche 1 bis 7, wobei jede individuelle Führungsvorrichtung (E) dazu ausgelegt ist, Audiodateien in Textdateien zu konvertieren und automatisch zu beginnen, die Beschreibung der Informationen über die ausgestellten Objekte in der Form von Text anzuzeigen, der sich über den Schirm der tragbaren Führungsvorrichtung (E) bewegt, wenn ein Stecker eines Ohrhörers nicht in eine Buchse (E5) der tragbaren Führungsvorrichtung (E) eingesteckt ist.

9. Führungssystem nach einem oder mehreren der Ansprüche 1 bis 8, **dadurch gekennzeichnet, dass** es eine Webseite enthält, die dazu ausgelegt ist, nach dem Besuch von jedem Besucher kontaktiert zu werden, der darin durch Eingeben von Erkennungsnachweisen, wie eine Benutzercode ID und ein Passwort PW, registriert ist, die bei Abgabe der Führungsvorrichtung zugeteilt wurden, um über das Internet in Form von Multimediadateien die Indikationen an der verfolgten Route und die während der Route gehörten Beschreibungen zu empfangen.

## Revendications

1. Un système de guide pour fournir aux visiteurs d'une exposition d'objets des informations pour chacun des objets exposés, le système comprenant :
au voisinage de chaque objet exposé, un dispositif (Bᵢ) d'identification principal respectif comportant son propre circuit d'alimentation en énergie et
de commande et apte à émettre, dans une zone limitée de l'espace environnant, une séquence d'impulsions électromagnétiques représentant un code unique **(UlDᵢ)** corrélé avec l'objet ; une pluralité de dispositifs guides portatifs individuels (E) pour les visiteurs comprenant des circuits récepteurs (E3, E11), des circuits de commande (E9) aptes à leur fournir lesdites informations ; et des moyens de traitement pour activer automatiquement une description des dites informations à l'aide du dit dispositif guide portatif, où :
- chaque dispositif d'identification principal (Bi) est, sans interruption et périodiquement, séquentiellement fait pour émettre lesdites séquences d'impulsions représentant son propre code unique (UlDᵢ), lesdites séquences étant mutuellement séparées par un intervalle de temps constant (T) égal pour tous les dispositifs ; et où
- les moyens de traitement activent la reproduction des informations correspondant à un objet (Ai) après que ledit circuit ait reçu au moins deux des dites séquences identiques consécutives d'impulsions séparées les unes des autres par ledit intervalle de temps (T) ;
le système comprenant en outre un serveur de contrôle central (C1) relié aux dits dispositifs guides portatifs (E) au moyen d'un réseau de transmission sans fil comportant un ou plusieurs noeuds radio (R) de transmission - et - réception, chacun d'eux étant localisé pour recevoir/transmettre dans sa propre zone le long d'un itinéraire de visite, le serveur (C1) étant adapté pour signaler sur un écran la présence et un code de reconnaissance de chaque dispositif guide portatif (E) présent dans la zone de réception/transmission,
où au moins un dispositif d'identification auxiliaire est prévu pour un ou plusieurs objets exposés, ledit dispositif d'identification auxiliaire étant adapté pour transmettre un code unique dans un champ ayant une dimension en plan sensiblement réduite par rapport à celui du dispositif d'identification principal correspondant (Bᵢ) pour activer la communication d'un signal d'alarme via le dispositif guide portatif porté par un utilisateur et le réseau sans fil (R) vers le serveur (C1) quand l'utilisateur approche de l'objet dans le champ de transmission du dit dispositif d'identification auxiliaire.

2. Un système de guide selon la revendication 1, **caractérisé en ce que** les moyens de traitement sont adaptés pour interrompre automatiquement la reproduction par le dispositif guide des informations sur un objet (i) devant lequel le visiteur a demeuré quand le circuit de réception (E3, E11) et le circuit de commande (E9) du dispositif guide (E) arrête la réception de ladite séquence d'impulsions représentant le code unique (UIDᵢ) attribué au dit objet (i) pendant un intervalle de temps au moins égal à ladite période (T).

3. Un système de guide selon l'une des revendications 1 et 2, **caractérisé en ce que** lesdits moyens de traitement sont adaptés pour commander le circuit de réception et de commande du dispositif guide de telle sorte que, lorsque le dispositif guide (E) reproduit les informations à propos d'un objet (i) qui intéresse le visiteur, si le circuit de réception (E3, E11) et de commande (E9) du même dispositif (E) reçoit une autre succession continue et séquencée d'une autre séquence d'impulsions représentant un code unique différent (UIDᵢ₊₁) d'un objet (i+1), le circuit de réception et de commande du dispositif guide portatif est adapté pour terminer la description de l'objet (i) et ensuite commencer automatiquement la description de l'objet (i+1).

4. Un système de guide selon la revendication 3, **caractérisé en ce que** le circuit de réception et de commande du dispositif guide portatif est adapté pour terminer la description de l'objet (i) et ensuite commencer automatiquement la description de l'objet (i+1) si les champs d'émission des dispositifs d'identification (B1, Bᵢ₊₁) de deux objets respectifs (I, i+1) se superposent ou interfèrent même seulement partiellement et si le visiteur est dans ladite zone de superposition des champs.

5. Un système de guide selon l'une quelconque des revendications précédentes, **caractérisé en ce que** le serveur (C1) est adapté pour activer un signal d'alarme quand le nombre de dispositifs guides présents simultanément dans l'une des dites zones dépasse un seuil.

6. Un système de guide selon une ou plusieurs des revendications 1 à 5, **caractérisé en ce que**, dans les dispositifs guides (E), sont mémorisés divers itinéraires de visite qui peuvent être sélectionnés par le visiteur à l'aide d'un bouton poussoir (E8) du dispositif guide lui-même et d'un menu affiché sur un écran (E4) de celui-ci, le dispositif guide affichant sur l'écran (E4) une carte correspondant à chaque itinéraire.

7. Un système de guide selon une ou plusieurs des revendications 1 à 6 pour une exposition commerciale d'objets à vendre, **caractérisé en ce que**, dans les dispositifs guides, est mémorisé un formulaire de commande pour acheter les objets exposés, le dispositif guide (E) étant adapté pour afficher automatiquement ledit formulaire à la fin de la description de chaque objet, un bouton poussoir étant prévu sur le dispositif guide (E) pour permettre au visiteur d'envoyer au serveur, au moyen du réseau sans fil (R), lesdits formulaires de commande pour confirmer ses ordres d'achat.

8. Un système de guide selon une ou plusieurs des revendications 1 à 7, où chaque dispositif guide individuel (E) est adapté pour convertir des dossiers audio en dossiers texte, et pour commencer automatiquement l'affichage de la description des dites informations sur les objets exposés sous la forme d'un texte glissant sur l'écran du dispositif guide portatif (E) si une prise d'un écouteur n'est pas insérée dans un connecteur (E5) du dispositif guide portatif (E).

9. Un système de guide selon une ou plusieurs des revendications 1 à 8, **caractérisé en ce qu'**il comporte un site Web adapté pour être contacté après que la visite par chaque visiteur y ait été enregistrée par l'entrée de laissez-passer de reconnaissance, tels qu'un code utilisateur ID et un mot de passe PW assignés lors de la livraison du dispositif guide, pour recevoir par Internet, sous forme de dossiers multimédia, les indications sur l'itinéraire suivi et les descriptions entendues le long du dit itinéraire.
